# EUROPÄISCHE PATENTSCHRIFT

(11) **EP 4 560 620 B1**
(45) Veröffentlichungstag und Bekanntmachung des Hinweises auf die Patenterteilung: **11.03.2026**
(21) Anmeldenummer: 23211120.3
(22) Anmeldetag: 21.11.2023
(51) Int. Cl.: G10K 11/00, B01J 19/10, B08B 7/02, B06B 1/06, G01N 29/28

(54) **VERFAHREN ZUM ANKOPPELN EINES ULTRASCHALL-KONVERTERS AN EIN BAUTEIL**
METHOD FOR COUPLING AN ULTRASONIC CONVERTER TO A COMPONENT
PROCÉDÉ DE COUPLAGE D'UN CONVERTISSEUR À ULTRASONS À UN COMPOSANT

(43) Veröffentlichungstag der Anmeldung: 28.05.2025
(73) Patentinhaber: Multi Sonic GmbH, 76275 Ettlingen (DE)
(72) Erfinder: SCHNEIDER, Arnold, 76275 Ettlingen (DE)
(74) Vertreter: Weiser Voith Gugler Patentanwälte Partnerschaft

(56) Entgegenhaltungen:
- DE-A1- 19 538 678
- KR-B1- 101 903 020
- US-A1- 2023 057 737
- US-B2- 10 052 667

## Beschreibung

Die vorliegende Erfindung betrifft ein Verfahren zum Ankoppeln eines Ultraschall-Konverters an ein Bauteil.

Um an oder in Bauteilen - wie Silos, Wärmetauschern, Rohrleitungen, Rinnen, Trichtern od.dgl. - anhaftende Verschmutzungen bzw. Verstopfungen infolge der Verschmutzung zu verhindern ("Anti-Fouling") und anhaftende Verschmutzungen zu lösen, ist z.B. für Kraftwerken oder die Industrie, insbesondere der chemische, petrochemische, Bau- oder Papierindustrie bekannt, das jeweilige Bauteil, insbesondere seine Wandung, mithilfe eines angekoppelten Ultraschall-Konverters in hochfrequente Schwingungen zu versetzen. Der Ultraschall-Konverter hat meist einen piezokeramischen Ultraschall-Aktor, der über einen - metallischen - Schwingkörper an das Bauteil ankoppelbar ist. Eine wiederholte Ultraschallanregung im Frequenzbereich zwischen etwa 18 kHz und 50 kHz, z.B. im Abstand von mehreren Sekunden für einige Sekunden, löst anhaftende Verschmutzungen und verhindert (oder reduziert zumindest) neue Ablagerungen.

Es versteht sich, dass die Anforderungen an die Ankopplung des Ultraschall-Konverters an das Bauteil hoch sind: Die Ankopplung muss auch der wiederholten Ultraschall-Beanspruchung mechanisch widerstehen und zugleich eine langfristig effektive Übertragung des Ultraschalls auf das Bauteil sicherstellen. Dazu wird eine flächige Verbindung zwischen dem Ultraschall-Konverter und dem Bauteil angestrebt.

Bekannt ist dazu beispielsweise, die Wandung des Bauteils mit einer Sackbohrung zu versehen und den Ultraschall-Konverter mit Flächenkontakt in die Sackbohrung einzusetzen, z.B. indem die Sackbohrung mit einem Innengewinde versehen ist, in welches der Ultraschall-Konverter über ein Koppelgewinde eingedreht wird. Die Schraubverbindung ermöglicht bei entsprechender Tiefe der Sackbohrung die sichere mechanische und auch eine flächige Ankopplung des Ultraschall-Konverters an das Bauteil. Allerdings können insbesondere bei geringer Wanddicke des Bauteils keine ausreichend tiefen Sackbohrungen vorgesehen werden, um die mechanische Belastbarkeit und die effektive Übertragung des Ultraschalls sicherzustellen. Andere Arten der Ankopplung, z.B. Anpressen mithilfe von Schellen oder Klemmen, Verschweißen oder Verkleben, haben sich in der Praxis nicht bewährt, da sich dabei entweder die Übertragung des Ultraschalls oder - insbesondere bei höheren Schallleistungen - die mechanische Stabilität oder beides als mangelhaft erwiesen haben. Auch erschweren Verschweißen und Verkleben das Tauschen eines allenfalls schadhaften Ultraschall-Konverters.

Das Dokument KR101903020 B1 offenbart eine Ultraschall-Antifouling-Vorrichtung zur Verwendung in der Bilge von Schiffen. Die Vorrichtung (100) weist einen Sockel (110) auf, der mit einem Schiffrumpf (10) aufliegt. Mit dem Sockel ist ein Stopfen (130) kombiniert. Ein Ultraschallgenerator (150) ist im Stopfen so gelagert, dass eine Ultraschall-Austrittsseite (151) mit einem ebenen Abschnitt versehen ist, der einer Außenseite des Schiffsrumpfes zugewandt ist.

Die Erfindung setzt sich zum Ziel, ein Verfahren zu schaffen, durch welches ein Ultraschall-Konverter sicher und effektiv an ein Bauteil angekoppelt werden kann.

Dieses Ziel wird mit einem Verfahren zum Ankoppeln eines Ultraschall-Konverters an ein Bauteil erreicht, welches die folgenden Schritte umfasst:
Bereitstellen eines Adapters mit einer Kontaktfläche für das Bauteil, einer von seiner Kontaktfläche ausgehenden Durchbrechung und einer Verankerung für den Ultraschall-Konverter;
Anlegen der Kontaktfläche des bereitgestellten Adapters an die Oberfläche des Bauteils;
Verschweißen des angelegten Adapters mit dem Bauteil mithilfe einer umlaufenden Schweißnaht unter Freilassen zumindest einer Lücke in der Schweißnaht;
Einbringen von Vergussmasse zwischen die Kontaktfläche des Adapters und die Oberfläche des Bauteils durch die Durchbrechung hindurch, bis aus der zumindest einen Lücke Vergussmasse austritt;
Aushärtenlassen der eingebrachten Vergussmasse; und
Verankern des Ultraschall-Konverters an der Verankerung des Adapters.

In dem Verfahren stellt überwiegend die Schweißnaht die erforderliche mechanische Belastbarkeit der Ankopplung sicher, die ausgehärtete Vergussmasse trägt in geringerem Maß dazu bei. Hingegen sorgt die Vergussmasse für eine besonders effektive Ultraschall-Kopplung zwischen dem Adapter und dem Bauteil, zwischen welchen beim Anlegen und Verschweißen stets unvermeidliche Zwischenräume und Spalte verbleiben, welche die Vergussmasse ausfüllt. Der Konverter kann dauerhaft oder lösbar an dem Adapter verankert werden, wobei die Verankerung den Anforderungen entsprechend flächig ausgeführt werden kann, indem Form und Größe des Adapters an jeweilige Erfordernisse angepasst werden.

In einer vorteilhaften Ausführungsform ist die Verankerung ein Innengewinde in einer Bohrung des Adapters, wobei der Schritt des Verankerns durch Eindrehen eines Koppelgewindes des Ultraschall-Konverters in das Innengewinde erfolgt. Dadurch wird eine lösbare, flächige Verankerung des Ultraschall-Konverters an dem Adapter und über diesen die Ankopplung des Ultraschall-Konverters an das Bauteil erzielt. Neben dem oder ringsum das Innengewinde kann am Adapter eine zusätzliche Anlagefläche für den Ultraschall-Konverter vorgesehen sein.

Besonders günstig ist, wenn die Durchbrechung des Adapters eine Durchgangsbohrung ist, welche an ihrer der Kontaktfläche abgewandten Seite das vorgenannte Innengewinde zum Eindrehen des Koppelgewindes hat. Dabei umfasst das Verfahren ferner den vor dem Schritt des Einbringens ausgeführten Schritt des Eindrehens einer Schraube in das Innengewinde, wobei die Schraube in Axialrichtung von einem Loch durchsetzt ist, durch welches Loch im Schritt des Einbringens die Vergussmasse eingebracht wird, und den nach dem Schritt des Einbringens und vor dem Schritt des Aushärtenlassens ausgeführten Schritt des Ausdrehens der Schraube aus dem Innengewinde. Der Adapter ist auf diese Weise besonders einfach im Aufbau und das Einbringen der Vergussmasse besonders sicher und dabei das Innengewinde durch die Schraube vor Verschmutzung durch Vergussmasse geschützt.

Bevorzugt ist der Adapter um eine Achse kreissymmetrisch und die Durchgangsbohrung koaxial zur Achse des Adapters, was einen besonders kompakten symmetrischen Aufbau des Adapters ermöglicht, welcher aufgrund der Kreissymmetrie auch besonders einfach ist. Ferner wird eine symmetrische Ultraschallausbreitung im Inneren des Adapters ermöglicht und eine gleichmäßige Verteilung der Vergussmasse beim Einbringen begünstigt, was die Ultraschall-Kopplung des Ultraschall-Konverters über den Adapter an das Bauteil verbessert.

In einer vorteilhaften Variante umfasst das Verfahren ferner die vor dem Schritt des Anlegens ausgeführten Schritte des Anrauens und/oder Entfettens der Oberfläche des Bauteils, um das Anhaften der Vergussmasse an der Oberfläche des Bauteils bzw. die Ultraschall-Kopplung zwischen der Kontaktfläche des Adapters und der Oberfläche des Bauteils weiter zu verbessern.

Ebenso wie die Oberfläche des Bauteils ist auch die Kontaktfläche des Adapters nicht zwingend eben. Insbesondere die Oberfläche des Bauteils ist häufig gekrümmt, z.B. weil das Bauteil ein zylindrisches Rohr oder Silo oder ein zylindrischer Wärmetauscher oder ein kegelstumpfförmiges Rohranschlussstück bzw. ein ebenso geformter Trichter od.dgl. ist. Daher umfasst das Verfahren in einer günstigen Ausführungsform ferner den vor dem Schritt des Anlegens ausgeführten Schritt des Angleichens der Kontaktfläche an die Oberflächenform des Bauteils. Durch ein solches Angleichen liegt die Kontaktfläche des Adapters besonders gut an der Oberfläche auf, da die unvermeidlichen Zwischenräume und Spalte zwischen den beiden besonders klein sind. Folglich ist auch nur wenig Vergussmasse erforderlich, was die Ultraschall-Kopplung zwischen Adapter und Bauteil begünstigt. Kleinere Spalte am Umfang der Kontaktfläche erleichtern überdies das Verschweißen des Adapters mit dem Bauteil und sorgen für eine sicherere Schweißverbindung.

In einer weiteren vorteilhaften Variante umfasst das Verfahren ferner den vor dem Schritt des Anlegens ausgeführten Schritt des Versehens der Kontaktfläche mit einer Textur. Die Textur umfasst bevorzugt einen an der Durchbrechung entspringenden spiralförmigen Wulst oder eine an der Durchbrechung entspringende spiralförmige Rinne. Die Textur, z.B. eine vergrößerte Rauheit, verbessert die Ultraschall-Kopplung zwischen dem Adapter und dem Bauteil und vergrößert die Oberfläche der Kontaktfläche für eine besonders effektive Ultraschallübertragung. Der spiralförmige Wulst oder die spiralförmige Rille bewirken eine gezielte Verteilung der Vergussmasse beim Einbringen, sodass unerwünschte Luft aus den Zwischenräumen oder Spalten zwischen der Oberfläche des Bauteils und der Kontaktfläche des Adapters effektiv verdrängt wird.

Günstig ist ferner, wenn im Schritt des Verschweißens mehrere, z.B. drei, vier oder mehr, über den Umfang der Kontaktfläche gleichmäßig verteilte Lücken in der Schweißnaht freigelassen werden. Auf diese Weise wird das Entweichen von Luft aus den Zwischenräumen bzw. Spalten zwischen der Kontaktfläche des Adapters und der Oberfläche des Bauteils begünstigt, sodass das Einbringen der Vergussmasse erleichtert und ein unerwünschtes Verbleiben von Lufteinschlüssen wirksam unterbunden wird. Die Anbindung des Adapters an das Bauteil und infolgedessen die Ultraschall-Kopplung werden verbessert.

Da viele der Anwendungen der Ultraschall-Anregung Stoffe betreffen, die bei erhöhten Temperaturen verarbeitet werden, ist vielfach vorteilhaft, wenn im Schritt des Einbringens eine Vergussmasse eingebracht wird, welche nach dem Schritt des Aushärtenlassens bei Temperaturen von bis zu 250° C temperaturfest ist. Auch Temperaturfestigkeit bei noch höheren Temperaturen kann in manchen Anwendungen erwünscht sein und durch das Einbringen entsprechender Vergussmasse erzielt werden.

In einer bevorzugten Ausführungsform ist die Vergussmasse ein Epoxidharz. Epoxidharze gibt es in vielen Varianten, die sich unter anderem in ihrer Härte im ausgehärteten Zustand und in ihrer Temperaturfestigkeit unterscheiden, sodass die für die jeweiligen Anwendungen geeigneten Harze vom Fachmann einfach ausgewählt werden können. Überdies haften Epoxidharze an vielen verschiedenartigen Oberflächen und schaffen bei universeller Einsetzbarkeit eine zuverlässig dauerhaft belastbare Ultraschall-Kopplung zwischen der Kontaktfläche des Adapters und der Oberfläche des Bauteils.

Die Erfindung wird nachstehend anhand eines in den beigeschlossenen Zeichnungen dargestellten Ausführungsbeispiels näher erläutert. In den Zeichnungen zeigen:
Fig. 1 einen erfindungsgemäßes Verfahren zum Ankoppeln eines Ultraschall-Konverters an ein Bauteil in einem Flussdiagramm;
Fig. 2 einen Adapter zum Ankoppeln des Ultraschall-Konverters an das Bauteil nach dem Verfahren von Fig. 1 in einer Perspektivansicht;
die Fig. 3a und 3b den Adapter von Fig. 2 in einer Seitenansicht (Fig. 3a) und in einem Längsschnitt (Fig. 3b) entlang einer Schnittlinie A-A von Fig. 3a;
Fig. 4 den Adapter von Fig. 2 und das Bauteil während des Verfahrens von Fig. 1 in einer teilweise geschnittenen Seitenansicht; und
Fig. 5 den Adapter von Fig. 2 und das Bauteil während des Verfahrens von Fig. 1 in einer teilweise geschnittenen Perspektivansicht.

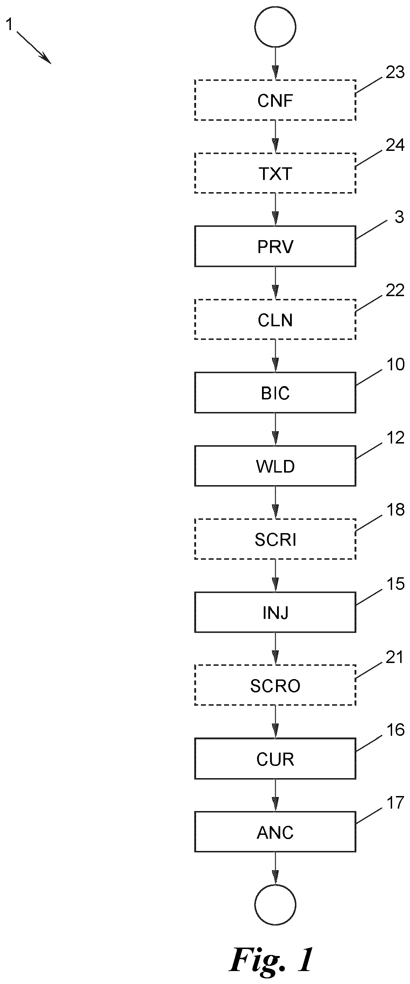

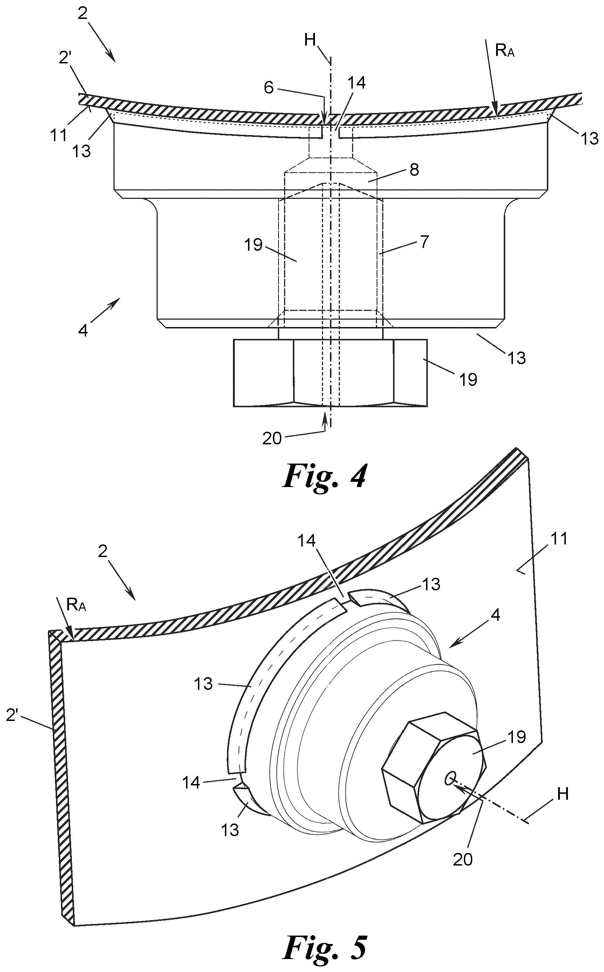

Fig. 1 zeigt ein Verfahren 1 zum Ankoppeln eines Ultraschall-Konverters an ein Bauteil 2 (Fig. 4). Zweck des Verfahrens 1 ist, das Bauteil 2 oder dessen Wandung 2' mit Hilfe des Ultraschall-Konverters in hochfrequente Schwingungen zu versetzen. Diese Schwingungen verhindern ein unerwünschtes Anlegen von verschmutzenden Teilchen an das Bauteil 2 bzw. seine Wandung 2' und ein Lösen bereits angelegter Teilchen. Genutzt wird eine solche Ultraschallanregung unter anderem in Kraftwerken oder der Industrie insbesondere in der chemischen, petrochemischen, Bau- oder Papierindustrie, wobei die Bauteile 2 beispielsweise Silos, Wärmetauscher, Rohrleitungen, Rinnen, Trichter, etc. sind, in welchen oder durch welche Flüssigkeiten, pastöse Stoffe und Gemische, Sande, Schotter od.dgl. gefördert werden.

In einem Schritt 3 des Verfahrens 1 wird ein Adapter 4 bereitgestellt.

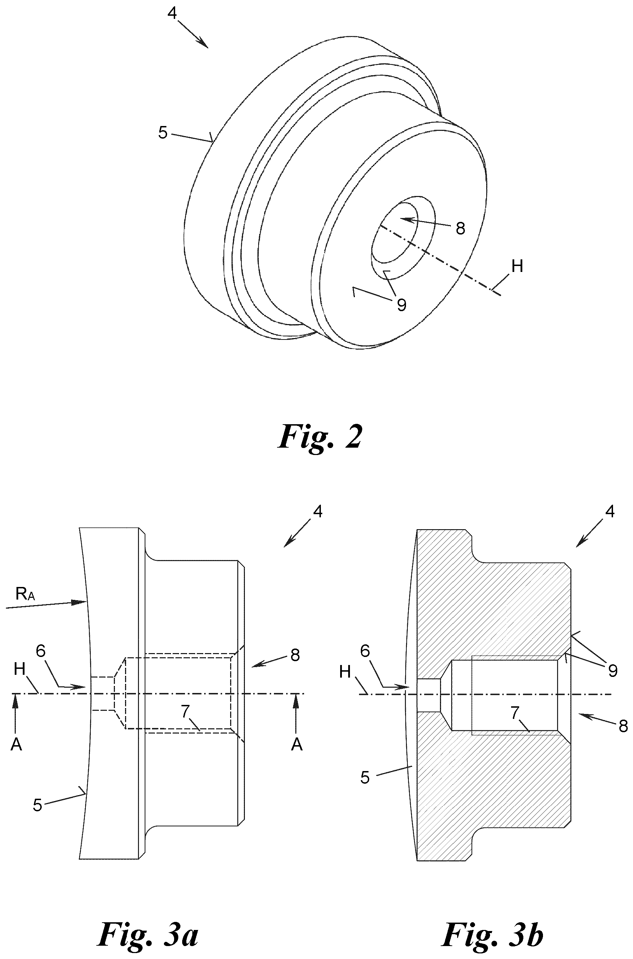

Gemäß den Fig. 2, 3a und 3b hat der Adapter 4 eine Kontaktfläche 5 für das Bauteil 2 und eine von seiner Kontaktfläche 5 ausgehende Durchbrechung 6, d.h. der Adapter 4 ist ausgehend von seiner Kontaktfläche 5 von der Durchbrechung 6 vollständig durchsetzt. Die Durchbrechung 6 kann im rechten Winkel zur Kontaktfläche 5 oder schräg dazu von der Kontaktfläche 5 ausgehen.

Ferner hat der Adapter 4 eine Verankerung 7 für den Ultraschall-Konverter. Im dargestellten Beispiel ist die Verankerung 7 ein Innengewinde in einer Bohrung 8 des Adapters 4, welches in Fig. 2 nicht näher dargestellt ist. Alternativ kann die Verankerung 7 z.B. ein Flansch, eine Schelle oder Klemme od.dgl. sein. Im dargestellten Beispiel bildet ferner die Bohrung 8 einen Teil der Durchbrechung 6. Alternativ kann die Bohrung 8 eine von der Verankerung 7 unabhängige Sackbohrung sein. Überdies kann neben der oder rund um die Bohrung 8 bzw. ihr Innengewinde am Adapter 4 eine zusätzliche z.B. konische und/oder ebene Anlagefläche 9 für den Ultraschall-Konverter vorgesehen sein.

In einem folgenden Schritt 10 (Fig. 1) wird die Kontaktfläche 5 des bereitgestellten Adapters 4 an die Oberfläche 11 des Bauteils 2 (hier: an die Außenoberfläche seiner Wandung 2') angelegt. Darauf wird in Schritt 12 der Adapter 4 mit dem Bauteil 2 verschweißt. Es versteht sich, dass dazu das Bauteil 2 - oder zumindest seine Oberfläche 11 - und der Adapter 4 - oder zumindest seine Kontaktfläche 5 - aus Metall, z.B. aus Aluminium, Stahl etc., oder einer Metalllegierung sind. Insbesondere können Bauteil 2 und Adapter 4 aus verschiedenen Metallen oder Metalllegierungen sein, die miteinander verschweißbar sind.

Gemäß den Fig. 4 und 5 erfolgt das Verschweißen 12 mithilfe einer umlaufenden Schweißnaht 13, wobei beim Setzen der Schweißnaht 13 zumindest eine Lücke 14 - im dargestellten Beispiel mehrere, z.B. drei, vier, oder mehr Lücken 14 - in der Schweißnaht 13 freigelassen werden. Die Schweißnaht 13 kann somit durch mehrere voneinander beabstandete Schweißnahtsegmente - oder sogar durch eine Vielzahl voneinander beabstandeter Schweißpunkte - gebildet sein. Im Fall mehrerer Lücken 14 sind diese optional gleichmäßig über den Umfang der Kontaktfläche 5 verteilt.

In einem nachfolgenden Schritt 15 des Verfahrens 1 wird durch die Durchbrechung 6 hindurch Vergussmasse (nicht dargestellt) zwischen die Kontaktfläche 5 des Adapters 4 und die Oberfläche 11 des Bauteils 2 eingebracht, bis aus der zumindest einen Lücke 14 Vergussmasse austritt. Beim Einbringen 15 der Vergussmasse wird Luft, die in unvermeidlichen Zwischenräumen bzw. Spalten zwischen der Kontaktfläche 5 des Adapters 4 und der Oberfläche 11 des Bauteils 2 während des Verschweißens 12 verblieben ist, von der Vergussmasse durch die zumindest eine Lücke 14 verdrängt.

Die Vergussmasse wird in einem folgenden Schritt 16 aushärten gelassen. Nach dem Aushärtenlassen 16 bildet die Vergussmasse eine Anbindung der Kontaktfläche 5 des Adapters 4 an die Oberfläche 11 des Bauteils 2, was eine gute Ultraschall-Kopplung zwischen den beiden Elementen und folglich ein effektive Übertragung von Ultraschall vom Adapter 4 auf das Bauteil 2 gewährleistet.

In einem abschließenden Schritt 17 wird der Ultraschall-Konverter (nicht dargestellt) an der Verankerung 7 des Adapters 4 verankert und dadurch über den Adapter 4 an das Bauteil 2 sowohl mechanisch als auch akustisch angekoppelt. Im dargestellten Beispiel erfolgt das Verankern 17 durch Eindrehen eines (nicht dargestellten) Koppelgewindes des Ultraschall-Konverters in das Innengewinde 7, wobei das Koppelgewinde ein Teil des Ultraschall-Konverters oder davon separat sein kann. In anderen, hier nicht dargestellten Ausführungsvarianten wird der Ultraschall-Konverter beim Verankern 17 an den Adapter 4 z.B. angeflanscht, angeklemmt etc. Um eine gute akustische Ankopplung an das Bauteil 2 zu erzielen, kann in einigen Fällen vorteilhaft sein, den Ultraschall-Konverter an die Form und die Größe des Adapters 4 anzupassen, sodass die Ultraschallausbreitung im Inneren des Adapters 4 und der infolge des zwischengelagerten Adapters 4 vergrößerte Abstand des Ultraschall-Konverters vom Bauteil 4 bei der Auslegung des Ultraschall-Konverters Berücksichtigung finden.

Wie in den Fig. 2 bis 5 gezeigt ist im dargestellten Ausführungsbeispiel die Durchbrechung 6 des Adapters 4 eine Durchgangsbohrung, die an ihrer der Kontaktfläche 5 abgewandten Seite die Verankerung 7 (hier: das Innengewinde zum Eindrehen des Koppelgewindes) hat. In diesem Fall kann vorgesehen werden, dass vor Schritt 15 des Einbringens der Vergussmasse ein optionaler Schritt 18 ausgeführt wird, bei welchem eine Schraube 19, die in ihrer Axialrichtung von einem Loch 20 durchsetzt ist, in das Innengewinde 7 eingedreht wird. Durch das Loch 20 wird in Schritt 15 die Vergussmasse eingebracht. Nach Schritt 15 des Einbringens und vor Schritt 16 des Aushärtenlassens der Vergussmasse wird in diesem Fall in einem Schritt 21 die Schraube 19 aus dem Innengewinde 7 ausgedreht.

Es versteht sich, dass der Adapter 4 jede beliebige Form haben kann, z.B. die Form eines Quaders - oder allgemeiner eines Parallelepipeds - oder beliebige andere Form. Ferner könnte der Adapter 4 mehrere Durchbrechungen (oder wie hier: Durchgangsbohrungen) 6 haben, welche optional unter verschiedenen Winkeln von der Kontaktfläche 5 ausgehen könnten. In der dargestellten Ausführungsform ist der Adapter 4 hingegen um eine Achse H kreissymmetrisch und die Durchgangsbohrung 6 koaxial zur Achse H des Adapters 4.

Je nach Zustand der Oberfläche 11 des Bauteils 2, von welchem in den Fig. 4 und 5 jeweils lediglich ein kleiner Abschnitt seiner Wandung 2' gezeigt ist, wird diese in einem oder mehreren optionalen Schritten (in Fig. 1 durch ein einziges Rechteck 22 symbolisiert) angerauht und/oder entfettet bzw. auf andere Weise gereinigt, um ein besseres Anhaften der Vergussmasse an der Oberfläche 11 zu erzielen. Dieser Schritt 22 bzw. diese Schritte werden vor Schritt 10 des Anlegens der Kontaktfläche 5 des Adapters 4 an die Oberfläche 11 des Bauteils 2 ausgeführt. Zum Entfetten können beispielsweise entsprechende organische Lösungsmittel, wässrige Lösungen etc. eingesetzt werden, wie dem Fachmann bekannt ist. Als besonders wirksam hat sich das Aerosolprodukt "Sprühreiniger S" des Herstellers Weicon GmbH & Co. KG erwiesen.

Da ferner das Bauteil 2 bzw. seine Wandung 2' nicht zwingend eben sein muss, kann optional - ebenfalls vor Schritt 10 des Anlegens - die Kontaktfläche 5 des Adapters 4 an die Oberflächenform des Bauteils 2 angeglichen werden (Schritt 23 in Fig. 1). Wie in den Beispielen der Fig. 4 und 5 gezeigt ist nämlich die Wandung 2' des Bauteils 2 optional gekrümmt, z.B. da das Bauteil 2 ein Rohr mit einem Außenradius R_{A} oder ein Trichter ist, wozu die Kontaktfläche 5 des Adapters 4 an den Außenradius R_{A} der Oberfläche 11 des Bauteils 2 in Schritt 23 angeglichen wird (siehe die Fig. 1 und 3a).

Es versteht sich, dass dieses Angleichen 23 nicht mit besonders hoher Genauigkeit erfolgen muss, da ohnehin die Vergussmasse verbleibende Spalte bzw. Zwischenräume zwischen der Kontaktfläche 5 und der Oberfläche 11 überbrückt. Je kleiner solche Spalte bzw. Zwischenräume jedoch sind, umso effektiver ist die Ultraschall-Kopplung zwischen dem Adapter 4 und dem Bauteil 2.

In einem weiteren optionalen Schritt 24, welcher ebenfalls vor Schritt 10 des Anlegens ausgeführt wird, wird die Kontaktfläche 5 des Adapters 4 mit einer Textur versehen, z.B. aufgerauht, geprägt od.dgl. Die Textur kann ein an der Durchbrechung 6 entspringender spiralförmiger Wulst (nicht dargestellt) oder eine an der Durchbrechung 6 entspringende spiralförmige Rinne sein oder diese zusätzlich umfassen. Sollten von der Kontaktfläche 5 mehrere Durchbrechungen 6 ausgehen, können auch mehrgängige spiralförmige Wulste oder Rinnen vorgesehen werden. Alternativ könnten Wulste oder Rinnen anstatt spiralförmig auch z.B. sternförmig von der bzw. den Durchbrechung(en) 6 ausgehen. Beispielsweise werden ferner die Lücken 14 in der Schweißnaht 13 an jenen Stellen vorgesehen, an welchen die Wulste oder Rinnen in den Umfang der Kontaktfläche 5 münden.

Wie dem Fachmann bekannt ist, kommen verschiedene Vergussmassen in Betracht, welche in Schritt 15 zwischen die Kontaktfläche 5 des Adapter 4 und die Oberfläche 11 des Bauteils 2 eingebracht werden. Diese sollen nicht zu weich sein, um den vom Ultraschall-Konverter abgegebenen Ultraschall nicht übermäßig zu dämpfen, und nicht zu hart, um nicht übermäßig spröde zu sein. Als geeignet hat sich beispielsweise Epoxidharz als Vergussmasse erwiesen.

Wenn gewünscht, kann eine solche Vergussmasse verwendet und in Schritt 15 eingebracht werden, welche nach dem Aushärtenlassen (Schritt 16) bei Temperaturen von bis zu 180°C, 250°C oder darüber temperaturfest ist. Beispielsweise haben sich die beiden Epoxidharz-Klebstoffe der Marke "Easy-Mix HT 180" bzw. "Easy-Mix HT 250" des Herstellers Weicon GmbH & Co. KG als gut geeignet erwiesen, welche im ausgehärten Zustand bis zu einer Temperatur von 180°C bzw. 250°C temperaturbeständig sind. Auch für niedrigere oder höhere Temperaturen sind geeignete Vergussmassen bzw. Epoxidharze bzw. -kleber verfügbar, beispielsweise der Acrylat-Strukturklebstoff der Marke "Easy-Mix RK-7100" desselben Herstellers für den Temperaturbereich von -55°C bis 125°C.

Es versteht sich, dass die in Fig. 1 dargestellte Reihenfolge der Schritte des Verfahrens 1 nicht zwingend ist, sondern - soweit nicht durch andere Schritte bedingt oder ohnehin ausdrücklich angeführt - eine andere Reihenfolge vorgesehen werden kann. Insbesondere einige der durch strichlierte Rechtecke symbolisierten optionalen Schritte können zueinander und zu den durch durchgezogene Rechtecke symbolisierten obligaten Schritten des Verfahrens 1 anders als in Fig. 1 dargestellt gereiht werden.

Die Erfindung ist nicht auf die dargestellten Ausführungsformen beschränkt, sondern umfasst alle Varianten, Modifikationen und deren Kombination, die in den Rahmen der angeschlossenen Ansprüche fallen.

## Patentansprüche

1. Verfahren zum Ankoppeln eines Ultraschall-Konverters an ein Bauteil (2), umfassend die Schritte:
Bereitstellen (3) eines Adapters (4) mit einer Kontaktfläche (5) für das Bauteil (2), einer von seiner Kontaktfläche (5) ausgehenden Durchbrechung (6) und einer Verankerung (7) für den Ultraschall-Konverter;
Anlegen (10) der Kontaktfläche (5) des bereitgestellten Adapters (4) an die Oberfläche (11) des Bauteils (2);
Verschweißen (12) des angelegten Adapters (4) mit dem Bauteil (2) mithilfe einer umlaufenden Schweißnaht (13) unter Freilassen zumindest einer Lücke (14) in der Schweißnaht (13);
Einbringen (15) von Vergussmasse zwischen die Kontaktfläche (5) des Adapters (4) und die Oberfläche (11) des Bauteils (2) durch die Durchbrechung (6) hindurch, bis aus der zumindest einen Lücke (14) Vergussmasse austritt;
Aushärtenlassen (16) der eingebrachten Vergussmasse; und
Verankern (17) des Ultraschall-Konverters an der Verankerung (7) des Adapters (4).

2. Verfahren nach Anspruch 1, wobei die Verankerung (7) ein Innengewinde (7) in einer Bohrung (8) des Adapters (4) ist, und wobei der Schritt (17) des Verankerns durch Eindrehen eines Koppelgewindes des Ultraschall-Konverters in das Innengewinde (7) erfolgt.

3. Verfahren nach Anspruch 2, wobei die Durchbrechung (6) des Adapters (4) eine Durchgangsbohrung (6) ist, welche an ihrer der Kontaktfläche (5) abgewandten Seite das Innengewinde (7) zum Eindrehen des Koppelgewindes hat, ferner umfassend den vor dem Schritt (15) des Einbringens ausgeführten Schritt (18) des Eindrehens einer Schraube (19) in das Innengewinde (7), wobei die Schraube (19) in Axialrichtung von einem Loch (20) durchsetzt ist, durch welches Loch (20) im Schritt (15) des Einbringens die Vergussmasse eingebracht wird, und den nach dem Schritt (15) des Einbringens und vor dem Schritt (16) des Aushärtenlassens ausgeführten Schritt (21) des Ausdrehens der Schraube (19) aus dem Innengewinde (7).

4. Verfahren nach Anspruch 3, wobei der Adapter (4) um eine Achse (H) kreissymmetrisch und die Durchgangsbohrung (6) koaxial zur Achse (H) des Adapters (4) ist.

5. Verfahren nach einem der Ansprüche 1 bis 4, ferner umfassend die vor dem Schritt (10) des Anlegens ausgeführten Schritte (22) des Anrauens und/oder Entfettens der Oberfläche (11) des Bauteils (2).

6. Verfahren nach einem der Ansprüche 1 bis 5, ferner umfassend den vor dem Schritt (10) des Anlegens ausgeführten Schritt (23) des Angleichens der Kontaktfläche (5) an die Oberflächenform des Bauteils (2).

7. Verfahren nach einem der Ansprüche 1 bis 6, ferner umfassend den vor dem Schritt (10) des Anlegens ausgeführten Schritt (24) des Versehens der Kontaktfläche (5) mit einer Textur, wobei die Textur bevorzugt einen an der Durchbrechung (6) entspringenden spiralförmigen Wulst oder eine an der Durchbrechung (6) entspringende spiralförmige Rinne umfasst.

8. Verfahren nach einem der Ansprüche 1 bis 7, wobei im Schritt (12) des Verschweißens mehrere über den Umfang der Kontaktfläche (5) gleichmäßig verteilte Lücken (14) in der Schweißnaht (13) freigelassen werden.

9. Verfahren nach einem der Ansprüche 1 bis 8, wobei im Schritt (15) des Einbringens eine Vergussmasse eingebracht wird, welche nach dem Schritt (16) des Aushärtenlassens bei Temperaturen von bis zu 250° C temperaturfest ist.

10. Verfahren nach einem der Ansprüche 1 bis 9, wobei die Vergussmasse ein Epoxidharz ist.

## Claims

1. A method for coupling an ultrasonic converter to a component (2), comprising the steps:
providing (3) an adapter (4) with a contacting surface (5) for the component (2), an opening (6) extending from its contacting surface (5) and an anchorage (7) for the ultrasonic converter;
positioning (10) the contacting surface (5) of the provided adapter (4) on the surface (11) of the component (2);
welding (12) the positioned adapter (4) to the component (2) by means of a circumferential weld seam (13) while leaving out at least one gap (14) in the weld seam (13);
introducing (15) of casting compound between the contacting surface (5) of the adapter (4) and the surface (11) of the component (2) through the opening (6) until casting compound emerges from the at least one gap (14);
allowing to cure (16) the introduced casting compound; and
anchoring (17) the ultrasonic converter on the anchorage (7) of the adapter (4).

2. The method according to claim 1, wherein the anchorage (7) is an internal thread (7) in a bore (8) of the adapter (4), and wherein the step (17) of anchoring is realised by screwing a coupling thread of the ultrasonic converter into the internal thread (7).

3. The method according to claim 2, wherein the opening (6) of the adapter (4) is a through bore (6) which has the internal thread (7) on its side facing away from the contacting surface (5) for screwing in the coupling thread, further comprising the step (18), carried out before the step (15) of introducing, of screwing a screw (19) into the internal thread (7), wherein the screw (19) is traversed in axial direction by a hole (20), through which hole (20) the casting compound is introduced in the step (15) of introducing, and the step (21), carried out after the step (15) of introducing and before the step (16) of allowing to cure, of screwing the screw (19) out of the internal thread (7).

4. The method according to claim 3, wherein the adapter (4) is circularly symmetrical about an axis (H) and the through bore (6) is coaxial to the axis (H) of the adapter (4).

5. The method according to any one of claims 1 to 4, further comprising the steps (22), carried out before the step (10) of positioning, of roughening and/or degreasing the surface (11) of the component (2).

6. The method according to any one of claims 1 to 5, further comprising the step (23), carried out before the step (10) of positioning, of adapting the contacting surface (5) to the surface shape of the component (2).

7. The method according to any one of claims 1 to 6, further comprising the step (24), carried out before the step (10) of positioning, of providing a texture to the contacting surface (5), wherein the texture preferably comprises a spiral ridge emanating at the opening (6) or a spiral groove emanating at the opening (6).

8. The method according to any one of claims 1 to 7, wherein, in the step (12) of welding, a plurality of gaps (14) distributed uniformly over the circumference of the contacting surface (5) are left out in the weld seam (13).

9. The method according to any one of claims 1 to 8, wherein, in the step (15) of introducing, a casting compound is introduced which, after the step (16) of allowing to cure, is temperature-resistant at temperatures of up to 250°C.

10. The method according to any one of claims 1 to 9, wherein the casting compound is an epoxy resin.

## Revendications

1. Procédé de couplage d'un convertisseur à ultrasons à un composant (2), comprenant les étapes :
la fourniture (3) d'un adaptateur (4) avec une surface de contact (5) pour le composant (2), une ouverture (6) partant de sa surface de contact (5) et un ancrage (7) pour le convertisseur à ultrasons ;
la mise en place (10) de la surface de contact (5) de l'adaptateur (4) fourni sur la surface (11) du composant (2) ;
le soudage (12) de l'adaptateur (4) mis en place avec le composant (2) au moyen d'un cordon de soudure (13) périphérique tout en laissant au moins un interstice (14) dans le cordon de soudure (13) ;
l'introduction (15) d'une masse de scellement entre la surface de contact (5) de l'adaptateur (4) et la surface (11) du composant (2) à travers l'ouverture (6) jusqu'à ce que la masse de scellement ressorte de l'au moins un interstice (14) ;
le durcissement (16) de la masse de scellement introduite ; et
la fixation (17) du convertisseur à ultrasons sur l'ancrage (7) de l'adaptateur (4).

2. Procédé selon la revendication 1, dans lequel l'ancrage (7) est un filetage intérieur (7) dans un alésage (8) de l'adaptateur (4), et dans lequel l'étape (17) de fixation est réalisée par le vissage d'un filetage de couplage du convertisseur à ultrasons dans le filetage intérieur (7).

3. Procédé selon la revendication 2, dans lequel l'ouverture (6) de l'adaptateur (4) est un alésage traversant (6) qui a le filetage intérieur (7) sur sa face opposée à la surface de contact (5) pour le vissage du filetage de couplage, comprenant en outre l'étape (18), exécutée avant l'étape (15) d'introduction, de vissage d'une vis (19) dans le filetage intérieur (7), dans lequel la vis (19) est traversée en direction axiale par un trou (20), à travers lequel trou (20) la masse de scellement est introduite dans l'étape (15) d'introduction, et l'étape (21), exécutée après l'étape (15) d'introduction et avant l'étape (16) de durcissement, de dévissage de la vis (19) hors du filetage intérieur (7).

4. Procédé selon la revendication 3, dans lequel l'adaptateur (4) est circulairement symétrique par rapport à un axe (H) et l'alésage traversant (6) est coaxial par rapport à l'axe (H) de l'adaptateur (4).

5. Procédé selon l'une des revendications 1 à 4, comprenant en outre les étapes (22), exécutées avant l'étape (10) de mise en place, de rugosification et/ou de dégraissage de la surface (11) du composant (2).

6. Procédé selon l'une des revendications 1 à 5, comprenant en outre l'étape (23), exécutée avant l'étape (10) de mise en place, d'adaptation de la surface de contact (5) à la forme de surface du composant (2).

7. Procédé selon l'une des revendications 1 à 6, comprenant en outre l'étape (24), exécutée avant l'étape (10) de mise en place, de texturation de la surface de contact (5), dans lequel la texture comprend de préférence un bourrelet en forme de spirale jaillissant au niveau de l'ouverture (6) ou une rainure en forme de spirale jaillissant au niveau de l'ouverture (6).

8. Procédé selon l'une des revendications 1 à 7, dans lequel, dans l'étape (12) de soudage, plusieurs interstices (14) répartis régulièrement sur le pourtour de la surface de contact (5) sont laissés dans le cordon de soudure (13).

9. Procédé selon l'une des revendications 1 à 8, dans lequel, dans l'étape (15) d'introduction, une masse de scellement est introduite, laquelle est résistante en température après l'étape (16) de durcissement à des températures jusqu'à 250 °C.

10. Procédé selon l'une des revendications 1 à 9, dans lequel la masse de scellement est une résine époxyde.
